# EUROPEAN PATENT APPLICATION

(11) **EP 4 826 574 A1**
(43) Date of publication of application: **21.10.2026**
(21) Application number: 24855902.3
(22) Date of filing: 04.09.2024
(51) Int. Cl.: G06F 18/2415, G01M 13/04

(54) **THRUST BEARING FULL-LIFE FAULT DIAGNOSIS METHOD AND SYSTEM BASED ON FILM THICKNESS AND WEAR**

(30) Priority: 09.05.2024 CN 202410568909
(71) Applicant: China Nuclear Power Engineering Co., Ltd., Shenzhen, Guangdong 518124 (CN); Suzhou Veizu Equipment Diagnosis Technology Co., Ltd., Suzhou, Jiangsu 215211 (CN)
(72) Inventor: OU, Ruijian, Shenzhen, Guangdong 518124 (CN); CHEN, Xingjiang, Shenzhen, Guangdong 518124 (CN); WANG, Chao, Shenzhen, Guangdong 518124 (CN); LI, Shengjie, Shenzhen, Guangdong 518124 (CN); WANG, Qi, Shenzhen, Guangdong 518124 (CN); CONG, Guohui, Shenzhen, Guangdong 518124 (CN)
(74) Representative: Greaves Brewster LLP
(86) International application number: PCT/CN2024/116777
(87) International publication number: WO 2025/040181

(57) **Abstract**

The present application relates to a thrust bearing full-life fault diagnosis method and system based on film thickness and wear. The method comprises: first establishing failure probability models for two stages, i.e., a lubrication failure stage and a wear failure stage, and simultaneously representing a lubrication state and a wear state of a bearing in the form of probabilities; then, performing a normal distribution test on monitoring data, and performing normal distribution conversion on abnormal distribution data; and finally, by using the established failure probability models for the two stages, i.e., the lubrication failure stage and the wear failure stage, and the acquired normal distribution data, performing diagnosis on the lubrication state and the wear state of the bearing on the basis of a 3σ criterion, thereby realizing full-life fault monitoring. In the present invention, failure evolution situations of two stages, i.e., a lubrication stage and a wear stage, of a thrust bearing are represented in the form of probabilities, so as to realize the full-life fault diagnosis of the thrust bearing, thereby addressing the current gap in research on dynamic fault diagnosis throughout the full-life cycle of thrust bearings, and improving the accuracy of fault early warning and condition-based maintenance of the thrust bearings under actual working conditions.

## Description

### CROSS-REFERENCE

This application references Chinese patent application No. 2024105689090, filed on May 9, 2024, entitled "METHOD AND SYSTEM FOR FULL-LIFE FAULT DIAGNOSIS OF THRUST BEARING BASED ON FILM THICKNESS AND WEAR", which is incorporated herein by reference in its entirety.

### TECHNICAL FIELD

This application relates to the field of thrust bearing fault detection technology, and in particular to a method and a system for full-life fault diagnosis of a thrust bearing based on film thickness and wear.

### BACKGROUND

Thrust bearings play a crucial role in vertical equipment such as nuclear main pumps and hydroelectric turbine units, supporting the axial load of the entire unit and serving as a key component for ensuring the safe, reliable, and long-term stable operation of the unit. A thrust bearing fault mainly includes two stages: an early-stage lubrication failure and a later-stage bearing pad wear failure. The first stage failure is characterized by a shift in lubrication state due to thinning of the oil film, evolving from hydrodynamic lubrication to mixed lubrication. This type of failure can induce bearing rubbing, bearing pad wear, and even bearing pad burning. The second stage failure is characterized by local wear of the bearing pad due to poor lubrication. This irreversible wear accumulates, leading to serious failures such as the removal and detachment of Babbitt alloy from the bearing pad surface. Therefore, monitoring the lubrication and wear status of the thrust bearing is of significant engineering importance for early fault warning and condition-based maintenance throughout the full-life cycle of the unit operation.

For monitoring lubrication state, vibration and acoustic emission monitoring methods are currently widely used. However, vibration monitoring and acoustic emission monitoring methods ([1] Xing PF, Li GB, Gao H, & Wang G. Experimental investigation on identifying friction state in lubricated tribosystem based on friction-induced vibration signals[J]. Mechanical systems and signal processing, 2020, 138: 106590 [2] Mokhtari N, Pelham JG, Nowoisky S. Friction and wear monitoring methods for journal bearings of geared turbofans based on acoustic emission signals and machine learning[J]. Lubricants, 2020, 8(3): 29.) mainly use the signals generated by frictional contact to reflect the poor lubrication phenomenon, which cannot cover the evolution process of the lubrication status before contact. The oil film thickness monitoring method mainly uses the measurement value of the oil film thickness to monitor the bearing lubrication status in real time, which can realize early-stage failure monitoring ([3] Dou P, Jia Y, Zheng P, Wu, T, Yu, M, Reddyhoff, T, & Peng, Z. Review of ultrasonic-based technology for oil film thickness measurement in lubrication[J]. Tribology International, 2022, 165: 107290.). Regarding wear measurement, there are mainly two types of methods: online measurement and offline measurement. The offline measurement mainly reflects the degree of wear by measuring the mass loss before and after wear or measuring the surface contour after wear, but the equipment is required to be shut down and the diagnostic result is delayed. The online measurement can be performed by using eddy current sensors, linear potentiometers, laser displacement sensors, etc. to reflect the degree of wear by measuring the changes in the position and displacement of a component before and after wear, but these sensors, when being installed, will damage the structure of the bearing pad.

Ultrasonic technology, with its non-invasive characteristics, can be used to achieve online measurement of lubricating film thickness without interfering with lubrication or damaging the bearing structure. Moreover, in terms of wear measurement, ultrasonic sensors have been successfully used to measure the wear depth of the bearing pad liner in real time for the thrust bearing: the thickness of the bearing pad liner after wear is measured in real time using the time-of-flight method, and the wear depth of the bearing pad liner is obtained by subtracting the thickness after wear from the original thickness of the bearing pad liner ([4] Brunskill H, Harper P, Lewis R. The real-time measurement of wear using ultrasonic reflectometry[J]. Wear, 2015, 332: 1129-1133.).

However, existing ultrasonic technologies monitor only a single variable such as wear or film thickness, and determine the current state of the bearing by comparing it with a theoretical threshold or a pre-set threshold. This approach only monitors in the lubrication failure or wear failure stage, making it difficult to diagnose faults throughout the full-life cycle of the operation. Furthermore, lubrication state oil film monitored data has a high sampling frequency and large data dispersion, and the failure probability varies at different times during the wear failure degradation process. Therefore, simply relying on given thresholds for diagnosis has low robustness, and the timeliness and accuracy of diagnosis are difficult to guarantee. Thus, how to achieve dynamic and accurate fault diagnosis throughout the full-life cycle of the thrust bearing remains a key research challenge.

### SUMMARY

In view of this, this application provides a method and a system for full-life fault diagnosis of a thrust bearing based on film thickness and wear to characterize an evolution state of the thrust bearing in the lubrication failure and the wear failure stages in terms of probability, thereby realizing the full-life fault diagnosis of the thrust bearing, addressing the current gap in research on dynamic full-life fault diagnosis of the thrust bearing, and improving the accuracy of an early fault warning and condition-based maintenance of the thrust bearing under actual working conditions.

A first aspect of the invention provides a method for full-life fault diagnosis of a thrust bearing based on film thickness and wear. The technical solution of the embodiment of the application includes following steps of:
S1, constructing probability models for lubrication failure and wear failure stages to characterize a lubrication state and a wear state of the bearing in terms of probability, respectively;
S2, performing a normality test on monitored data; if the data conform to a normal distribution, proceeding directly to step S3; for non-normally distributed data, performing a normal distribution transformation before proceeding to step S3; and
S3, diagnosing the lubrication state and the wear state of the bearing based on a 3σ criterion, by using the probability models for the lubrication failure and the wear failure stages constructed in step S1 and normal distribution data obtained in step S2 to achieve a full-life fault monitoring.

In some embodiments, the probability model for the lubrication failure constructed in step S1 is: ${Φ}_{1} \left({x}_{1}\right) = \left\{\begin{matrix}1 , & {x}_{1} \leq {D}_{1} \\ 2 {\int }_{x}^{+ ∞} {f}_{1} \left({x}_{1}\right) dx , & {x}_{1} > {D}_{1}\end{matrix}\right.$${f}_{1} \left({x}_{1}\right) = \frac{1}{\sqrt{2 π} σ} exp \left(-\frac{{\left({x}_{1}-{D}_{1}\right)}^{2}}{2 {σ}_{1}^{2}}\right)$

Where *x*₁ denotes a current monitored value of the film thickness, Φ₁(*x*₁) denotes a lubrication failure probability, *f*₁(*x*₁) is a probability density function of the lubrication failure, *D*₁ denotes a theoretical threshold of the lubrication failure and is equal to a surface roughness of a bearing pad in the lubrication failure stage, and σ₁ denotes a standard deviation of the film thickness and is calculated by performing a standard deviation calculation for entire data obtained from an experiment.

In some embodiments, the probability model for the wear failure constructed in step S1 is: ${Φ}_{2} \left({x}_{2}\right) = \left\{\begin{matrix}2 {\int }_{- ∞}^{x} {f}_{2} \left({x}_{2}\right) dx , & {x}_{2} < {D}_{2} \\ 1 , & {x}_{2} \geq {D}_{2}\end{matrix}\right.$${f}_{2} \left({x}_{2}\right) = \frac{1}{\sqrt{2 π} σ} exp \left(-\frac{{\left({x}_{2}-{D}_{2}\right)}^{2}}{2 {{σ}_{2}}^{2}}\right)$

Where *x*₂ denotes a current monitored value of a wear depth, Φ₂(*x*₂) denotes a wear failure probability, *f*₂(*x*₂) is a probability density function of the wear failure, *D*₂ denotes a theoretical threshold of the wear failure and is equal to a thickness of a bearing pad liner in the wear failure stage, and *σ*₂ denotes a standard deviation of the wear depth and is calculated by performing a standard deviation calculation for entire data obtained from an experiment.

In some embodiments, in step S2, a Jarque-Bera (JB) test method is used for a normality hypothesis test; if not conform to a normal distribution, a Box -Cox transformation is used to transform them into a state approximate to a normal distribution; a formula of the Jarque-Bera test method is:
$JB = \frac{n}{6} \left({S}^{2}+\frac{1}{4}{\left(K-3\right)}^{2}\right)$

where *n* denotes a sample size of the monitored data for indicators, S denotes a sample skewness, and *K* denotes a sample kurtosis.

In some embodiments, the method includes, first, calculating the skewness and the kurtosis of a monitored dataset for the indicators; then, calculating a JB statistic by using the formula, and comparing the JB statistic with a critical value of a chi-square distribution to test whether the monitored data conform to a normal distribution.

In some embodiments, the Box-Cox transformation is:
$y \left(λ\right) = \left\{\begin{matrix}\frac{{x}^{λ} - 1}{λ} , & λ \neq 0 \\ ln \left(x\right) , & λ = 0\end{matrix}\right.$

Where x denotes raw monitored data which are required to be positive, y(λ) denotes transformed data, and λ denotes a transformation parameter obtained through data optimization to make the transformed data approximate to a normal distribution.

In some embodiments, in step S3, formulating a bearing diagnosis strategy by introducing the 3σ criterion includes: when a lubrication failure probability and a wear failure probability Φ(x) are less than 0.6826, diagnosing the bearing as being in normal operating condition; when either Φ(x) is greater than or equal to 0.6826, diagnosing the bearing as being in an early warning state, and outputting a lubrication failure or wear failure warning; when either Φ(x) is greater than 0.9545, determining that the lubrication failure or the wear failure has occurred.

A second aspect of the application provides a system for full-life fault diagnosis of a thrust bearing based on film thickness and wear, including: a modelling module, configured to construct probability models for lubrication failure and wear failure stages to characterize a lubrication state and a wear state of the bearing in terms of probability, respectively;
a data testing module, configured to perform a normality test on monitored data and transform obtained non-normally distributed data into normally distributed data; and
a diagnosing module, configured to diagnose the lubrication state and the wear state of the bearing based on a 3σ criterion by using the probability models for the lubrication failure and the wear failure stages constructed by the modelling module and the normally or approximately normally distributed data obtained by the data testing module to achieve the full-life fault diagnosis.

Compared with the prior art, the present invention achieves at least the following beneficial effects.

This invention first constructs the probability models for two stages of lubrication failure and wear failure to characterize the lubrication state and the wear state of the bearing in the form of probability, respectively. Then, the normality test is performed on the monitored data, and the normality transformation is performed for the non-normally distributed data. Finally, the lubrication state and the wear state of the bearing are diagnosed based on the 3σ criterion by using the constructed models and the data. Because the full-life degradation process of the thrust bearing includes two stages, i.e., the lubrication failure and the wear failure. The first stage failure is characterized by the shift in the lubrication state due to thinning of the oil film, and the lubrication state degradation can be diagnosed based on the oil film thickness. The second stage failure is characterized by local wear of the bearing pad due to poor lubrication. This irreversible wear accumulates, thus leading to the removal of the Babbitt alloy from the bearing pad surface. Therefore, the failure during the wear stage can be diagnosed based on the wear depth of the bearing pad liner. Therefore, the invention can comprehensively achieve an early warning of failures throughout the full-life cycle of the thrust bearing and is of significant engineering importance.

For the two stages of lubrication failure and wear failure, the invention constructs the probability models for the lubrication failure and for the wear failure to probabilistically characterize monitored indicators. Furthermore, experimentally obtained data are used to construct data-driven and optimized thresholds and model parameters, thereby improving the fitting degree of the model and the robustness of the diagnosis.

To ensure that the data meet the model assumptions, the invention performs the normality hypothesis test on the data by using the Jarque-Bera test method. If the data do not conform to a normal distribution, the Box-Cox transformation is used to convert the data to a state approximate to a normal distribution. Because the size of the sampled dataset is relatively large, if conventional hypothesis testing methods are used, individual data, which deviates from the normal distribution but may sometimes be insignificant to the whole system, might result in a test failure, thus reducing the scientific validity of the hypothesis test results. In the Jarque-Bera test method, the skewness and kurtosis of the sample data are compared with the skewness and kurtosis of a normal distribution (for a normal distribution, the skewness is 0, and the kurtosis is 3), making the test for a dataset with a large size more accurate.

This invention introduces the 3σ criterion to formulate a scientific bearing diagnosis strategy, that is: when both the lubrication failure probability and the wear failure probability Φ(x) are less than 0.6826, the bearing is diagnosed as being in normal operating condition; when either Φ(x) is greater than or equal to 0.6826, the bearing is diagnosed as being in an early warning state, and a lubrication/ or wear failure warning is output; when either Φ(x) is greater than 0.9545, it means that a lubrication failure or a wear failure has occurred. In a normal distribution, approximately 68.26% of the data falls within one standard deviation of the mean, and 95.45% of the data falls within two standard deviations. This method provides a scientific basis for bearing maintenance based on the distribution characteristics of the data. Moreover, by setting probability thresholds of the failures, it is possible to effectively distinguish when to perform maintenance and when to issue an early warning, thereby avoiding over-maintenance, saving maintenance costs, and ensuring the reliable bearing operation. Furthermore, by using the probability thresholds of two stages of failures, the lubrication failure and the wear failure can be distinguished, which helps to determine more targeted maintenance measures, thereby improving the effectiveness of maintenance.

In summary, the method of this invention realizes a full-life fault diagnosis of the thrust bearing, fills the current gap in the research on a dynamic full-life fault diagnosis of a thrust bearing, and improves the accuracy of early fault warning and condition-based maintenance of the thrust bearing under actual operating conditions.

The above description is only an overview of the technical solutions of this application. In order to better understand the technical schemes of this application and to implement it in accordance with the contents of the specification, and to make the above and other objectives, features and advantages of this application more obvious and better understood, the specific embodiments of this application are described as follows.

### BRIEF DESCRIPTION OF THE DRAWINGS

Various other advantages and benefits will become apparent to those ordinary skilled in the art upon reading the detailed description of the embodiments described below. The accompanying drawings are for illustrative purposes only but not intended to limit the scope of this application. Furthermore, the same reference numerals denote the same parts throughout the drawings. In the drawings:
FIG. 1 is a flowchart of a method for full-life fault diagnosis of a thrust bearing based on film thickness and wear according to an embodiment of the application.
FIG. 2 is a diagram showing diagnostic results according to another embodiment of this application.

### DETAILED DESCRIPTION OF THE EMBODIMENTS

The embodiments of the technical solutions of this application will be described in detail with reference to the accompanying drawings. These embodiments are only used to more clearly illustrate the technical solutions of the application and are therefore merely examples, but not intended to limit the scope of protection of the application.

Unless otherwise defined, all technical and scientific terms used herein have the same meanings as commonly understood by those ordinary skilled in the art to which the application belongs. The terminology used herein is for the purpose of describing particular embodiments only but not intended to limit the application. The terms "comprise" and "have", and any variations thereof, in the specification, claims, and the description of the drawings are intended to cover a non-exclusive inclusion.

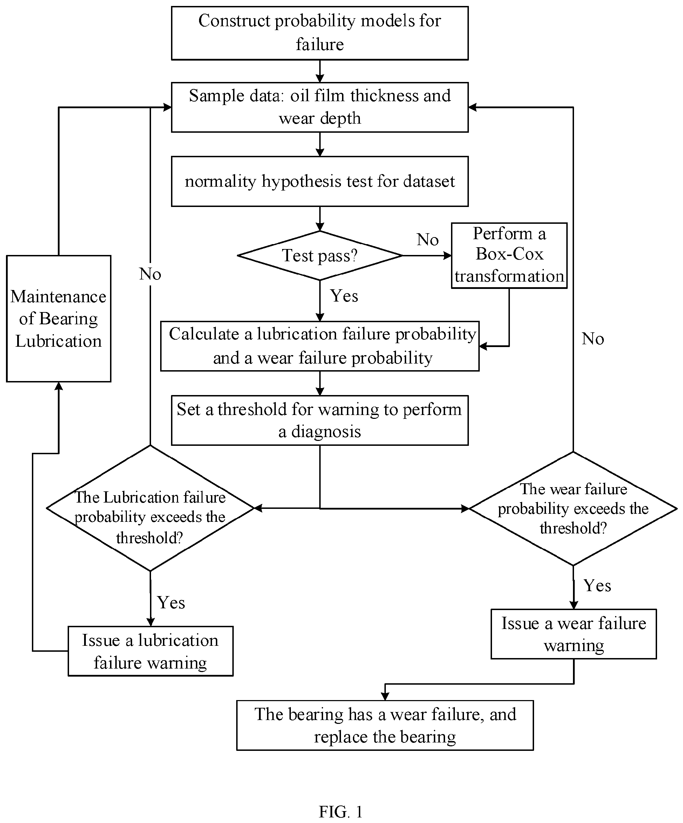

Referring to FIG. 1, a method for full-life fault diagnosis of a thrust bearing based on film thickness and wear includes the following steps.

S1. Construct probability models for lubrication failure and wear failure stages to characterize a lubrication state and a wear state of the bearing in terms of probability, respectively.

Assuming that a change in oil film thickness and a degradation of wear mass of the bearing pad liner each follow a normal distribution, unified probability models for two failure stages are constructed. The probability model for the lubrication failure is specifically as follows: ${Φ}_{1} \left({x}_{1}\right) = \left\{\begin{matrix}1 , & {x}_{1} \leq {D}_{1} \\ 2 {\int }_{x}^{+ ∞} {f}_{1} \left({x}_{1}\right) dx , & {x}_{1} > {D}_{1}\end{matrix}\right.$${f}_{1} \left({x}_{1}\right) = \frac{1}{\sqrt{2 π} σ} exp \left(-\frac{{\left({x}_{1}-{D}_{1}\right)}^{2}}{2 {σ}_{1}^{2}}\right)$

Where *x*₁ denotes a current monitored value of the film thickness, Φ₁(*x*₁) denotes a lubrication failure probability, *f*₁(*x*₁) is a probability density function of the lubrication failure, *D*₁ denotes a theoretical threshold of the lubrication failure and is equal to the surface roughness of the bearing pad in the lubrication failure stage, and σ₁ denotes a standard deviation of the film thickness and is calculated by performing standard deviation calculation for the entire data obtained from an experiment.

The constructed probability model for the wear failure is as follows: ${Φ}_{2} \left({x}_{2}\right) = \left\{\begin{matrix}2 {\int }_{- ∞}^{x} {f}_{2} \left({x}_{2}\right) dx , & {x}_{2} < {D}_{2} \\ 1 , & {x}_{2} \geq {D}_{2}\end{matrix}\right.$${f}_{2} \left({x}_{2}\right) = \frac{1}{\sqrt{2 π} σ} exp \left(-\frac{{\left({x}_{2}-{D}_{2}\right)}^{2}}{2 {{σ}_{2}}^{2}}\right)$

Where *x*₂ denotes a current monitored value of a wear depth, Φ₂ (*x*₂) denotes a wear failure probability, *f*₂(*x*₂) is a probability density function of the wear failure, *D*₂ denotes a theoretical threshold of the wear failure and is equal to the thickness of the bearing pad liner in the wear failure stage, and *σ*₂ denotes the standard deviation of the wear depth and is calculated by performing a standard deviation calculation for the entire data obtained from an experiment.

S2. Perform a normality test on the monitored data. If the data conform to a normal distribution, proceed directly to step S3. For non-normally distributed data, perform a normal distribution transformation before proceeding to step S3.

Due to the large size of the monitored dataset, a Jarque-Bera test method is used for the normality hypothesis test. When the hypothesis test passes, the probability formulas for the two failure stages are used to characterize the lubrication state and the wear state of the bearing, respectively. When the hypothesis test fails, a Box-Cox transformation is performed on the monitored dataset to make the data characteristics approximate to a normal distribution, and then the failure probabilities are calculated based on the probability formulas for the two failure stages.

The formula of the Jarque-Bera test method is as follows:
$JB = \frac{n}{6} \left({S}^{2}+\frac{1}{4}{\left(K-3\right)}^{2}\right)$

Where *n* denotes a sample size of the monitored data for indicators, S denotes a sample skewness, and K denotes a sample kurtosis.

First, the skewness and kurtosis of the monitored dataset for indicators are calculated. Then, the Jarque-Bera (JB) statistic is calculated by using the formula, and the JB statistic is compared with a critical value of a chi-square distribution to test whether the monitored data conform to a normal distribution.

When the hypothesis test fails, the Box-Cox transformation is performed on the experimental dataset to make the data characteristics approximate to a normal distribution. The specific method of the Box-Cox transformation is as follows:
$y \left(λ\right) = \left\{\begin{matrix}\frac{{x}^{λ} - 1}{λ} , & λ \neq 0 \\ ln \left(x\right) , & λ = 0\end{matrix}\right.$

Where x denotes raw monitored data (which is required to be positive), y(λ) denotes transformed data, and λdenotes a transformation parameter, and can be obtained through data optimization to make the transformed data approximate to the normal distribution as much as possible.

S3. The lubrication state and the wear state of the bearing are diagnosed based on a 3σ criterion, by using the probability models for the lubrication failure and the wear failure stages constructed in step S1 and the normal distribution data obtained in step S2, to achieve a full-life fault monitoring.

The 3σ criterion is introduced to formulate a scientific bearing diagnosis strategy, that is: when both the lubrication failure probability and the wear failure probability Φ(x) are less than 0.6826, the bearing is diagnosed as being in normal operating condition; when either Φ(x) is greater than or equal to 0.6826, the bearing is diagnosed as being in an early warning state, and a lubrication or wear failure warning is output; when either Φ(x) is greater than 0.9545, it is determined that a lubrication failure or a wear failure has occurred.

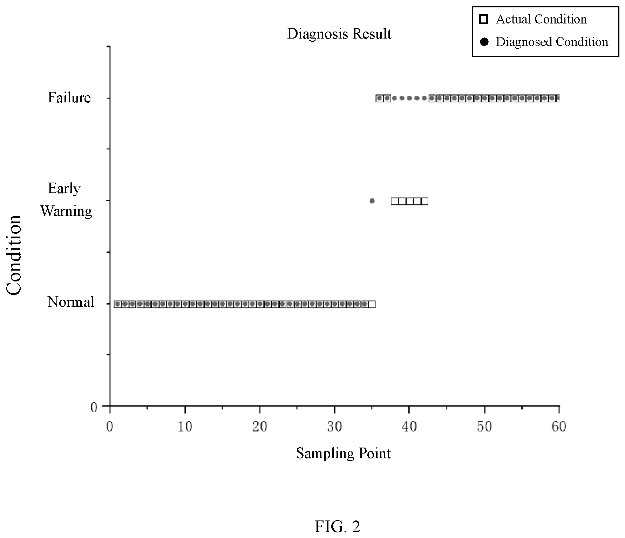

Referring to FIG. 2, which shows a diagnostic case of the embodiment, in the figure, a box represents an actual bearing state, and a dot represents a diagnostic bearing state. As can be seen from FIG. 2, the embodiment of the method can capture all bearing failure states in the embodiment, and the false detection rate is relatively low when the bearing is in normal conditions.

A system of full-life fault diagnosis for a thrust bearing based on film thickness and wear includes:
a modelling module, configured to construct probability models for lubrication failure and wear failure stages to characterize a lubrication state and a wear state of the bearing in terms of probability, respectively;
a data testing module, configured to perform a normality test on the monitored data and transform obtained non-normally distributed data into normally distributed data;
a diagnosing module, configured to diagnose the lubrication state and the wear state of the bearing based on 3σ criterion by using the probability models for the lubrication failure and the wear failure stages constructed by the modelling module and the normally or approximately normally distributed data obtained by the data testing module to achieve the full-life fault diagnosis.

Those ordinary skilled in the art will understand that embodiments of this application can be provided as methods, systems, or computer program products. Therefore, this application can take the form of a complete hardware embodiment, a complete software embodiment, or an embodiment combining software and hardware. Furthermore, this application can take the form of a computer program product performed on one or more computer-usable storage media (including but not limited to disk storage, CD-ROM, optical storage, etc.) containing computer-readable program codes.

This application is described with reference to methods, apparatus (systems), and flowcharts and/or block diagrams of computer program products according to embodiments of this application. It should be understood that each block of the flowchart and/or the block diagram, and combinations of blocks in the flowchart and/or in the block diagram, can be implemented by computer program instructions. These computer program instructions can be provided to a processor of a general-purpose computer, a special-purpose computer, an embedded processor, or any other programmable data processing apparatus to produce a machine, such that the instructions, when executed via the processor of the computer or any other programmable data processing apparatus, create an apparatus for implementing the functions, which are specified in one or more procedures of the flowchart and/or in one or more blocks of the block diagrams.

These computer program instructions may also be stored in a computer-readable storage medium that can direct a computer or any other programmable data processing device to operate in a particular manner, such that the instructions stored in the computer-readable storage medium produce a product including instruction devices that implement the functions specified in one or more procedures of the flowchart and/or in one or more blocks of the block diagram.

These computer program instructions may also be loaded onto a computer or other programmable data processing apparatus to cause a series of operational steps to be performed on the computer or other programmable apparatus to produce a computer-implemented process, such that the instructions, when executed on the computer or other programmable apparatus, provide steps for implementing the functions specified in one or more procedures of the flowchart and/or in one or more blocks of the block diagram.

The above contents are only for illustrating the technical concepts of the present invention and should not be construed as limiting the scope of protection of the present invention. Any modifications made to the technical solutions based on the technical concepts proposed in this invention shall fall within the scope of protection of the claims of this invention.

Finally, it should be noted that the above embodiments are only used to illustrate the technical solutions of this application, but not intended to limit the application. Although this application has been described in detail with reference to the foregoing embodiments, those ordinary skilled in the art should understand that modifications can still be made to the technical solutions described in the foregoing embodiments, or equivalent substitutions can be made to some or all of the technical features therein; and these modifications or substitutions do not cause the essence of the corresponding technical solutions to deviate from the scope of the technical solutions of the embodiments of this application, and they should all be covered within the scope of the claims and specification of this application. In particular, as long as there is no structural conflict, the various technical features mentioned in the various embodiments can be combined in any way. This application is not limited to the specific embodiments disclosed herein, but includes all technical solutions falling within the scope of the claims.

## Claims

1. A method for full-life fault diagnosis of a thrust bearing based on film thickness and wear, comprising following steps of:
S1, constructing probability models for lubrication failure and wear failure stages to characterize a lubrication state and a wear state of the bearing in terms of probability, respectively;
S2, performing a normality test on monitored data; if the data conform to a normal distribution, proceeding directly to step S3; for non-normally distributed data, performing a normal distribution transformation before proceeding to step S3; and
S3, diagnosing the lubrication state and the wear state of the bearing based on a 3σ criterion, by using the probability models for the lubrication failure and the wear failure stages constructed in step S1 and normal distribution data obtained in step S2 to achieve a full-life fault monitoring.

2. The method according to claim 1, wherein the probability model for the lubrication failure constructed in step S1 is: ${Φ}_{1} \left({x}_{1}\right) = \left\{\begin{matrix}1 , & {x}_{1} \leq {D}_{1} \\ 2 {\int }_{x}^{+ ∞} {f}_{1} \left({x}_{1}\right) dx , & {x}_{1} > {D}_{1}\end{matrix}\right.$ ${f}_{1} \left({x}_{1}\right) = \frac{1}{\sqrt{2 π} σ} exp \left(-\frac{{\left({x}_{1}-{D}_{1}\right)}^{2}}{2 {σ}_{1}^{2}}\right)$ wherein *x*₁ denotes a current monitored value of the film thickness, Φ₁(*x*₁) denotes a lubrication failure probability, *f*₁(*x*₁) is a probability density function of the lubrication failure, *D*₁ denotes a theoretical threshold of the lubrication failure and is equal to a surface roughness of a bearing pad in the lubrication failure stage, and *σ*₁ denotes a standard deviation of the film thickness and is calculated by performing a standard deviation calculation for entire data obtained from an experiment.

3. The method according to claim 1, wherein the probability model for the wear failure constructed in step S1 is: ${Φ}_{2} \left({x}_{2}\right) = \left\{\begin{matrix}2 {\int }_{- ∞}^{x} {f}_{2} \left({x}_{2}\right) dx , & {x}_{2} < {D}_{2} \\ 1 , & {x}_{2} \geq {D}_{2}\end{matrix}\right.$ ${f}_{2} \left({x}_{2}\right) = \frac{1}{\sqrt{2 π} σ} exp \left(-\frac{{\left({x}_{2}-{D}_{2}\right)}^{2}}{2 {{σ}_{2}}^{2}}\right)$ wherein *x*₂ denotes a current monitored value of a wear depth, Φ₂(*x*₂) denotes a lubrication failure probability, *f*₂(*x*₂) is a probability density function of the lubrication failure, *D*₂ denotes a theoretical threshold of the wear failure and is equal to a thickness of a bearing pad liner in the wear failure stage, and *σ*₂ denotes a standard deviation of the wear depth and is calculated by performing a standard deviation calculation for entire data obtained from an experiment.

4. The method according to claim 1, wherein in step S2, a Jarque-Bera (JB) test method is used for a normality hypothesis test; if not conform to a normal distribution, a Box -Cox transformation is used to transform them into a state approximate to a normal distribution; a formula of the Jarque-Bera test method is: $JB = \frac{n}{6} \left({S}^{2}+\frac{1}{4}{\left(K-3\right)}^{2}\right)$ wherein *n* denotes a sample size of the monitored data for indicators, S denotes a sample skewness, and K denotes a sample kurtosis.

5. The method according to claim 4, comprising, first, calculating the skewness and the kurtosis of a monitored dataset for the indicators; then, calculating a JB statistic by using the formula, and comparing the JB statistic with a critical value of a chi-square distribution to test whether the monitored data conform to a normal distribution.

6. The method according to claim 4, wherein the Box-Cox transformation is: $y \left(λ\right) = \left\{\begin{matrix}\frac{{x}^{λ} - 1}{λ} , & λ \neq 0 \\ ln \left(x\right) , & λ = 0\end{matrix}\right.$ wherein x denotes raw monitored data which are required to be positive, y(λ) denotes transformed data, and λ denotes a transformation parameter obtained through data optimization to make the transformed data approximate to a normal distribution.

7. The method according to claim 1, wherein in step S3, formulating a bearing diagnosis strategy by introducing the 3σ criterion comprises: when a lubrication failure probability and a wear failure probability Φ(x) are less than 0.6826, diagnosing the bearing as being in normal operating condition; when either Φ(x) is greater than or equal to 0.6826, diagnosing the bearing as being in an early warning state, and outputting a lubrication failure or wear failure warning; when either Φ(x) is greater than 0.9545, determining that the lubrication failure or the wear failure has occurred.

8. A system for full-life fault diagnosis of a thrust bearing based on film thickness and wear, performing the method of any one of claims 1-7, comprising:
a modelling module, configured to construct probability models for lubrication failure and wear failure stages to characterize a lubrication state and a wear state of the bearing in terms of probability, respectively;
a data testing module, configured to perform a normality test on monitored data and transform obtained non-normally distributed data into normally distributed data; and
a diagnosing module, configured to diagnose the lubrication state and the wear state of the bearing based on a 3σ criterion by using the probability models for the lubrication failure and the wear failure stages constructed by the modelling module and normally or approximately normally distributed data obtained by the data testing module to achieve the full-life fault diagnosis.

9. A computer device, comprising a memory and a processor, wherein the memory has a computer program stored thereon, and the processor, when executing the computer program, performs steps of the method according to any one of claims 1 to 7.

10. A computer-readable storage medium, having a computer program stored thereon, wherein the computer program, when executed by a processor, performs steps of the method according to any one of claims 1 to 7.
